# FASCICULE DE BREVET EUROPEEN

(11) **EP 1 547 185 B1**
(45) Date de publication et mention de la délivrance du brevet: **01.03.2006**
(21) Numéro de dépôt: 03798954.8
(22) Date de dépôt: 02.10.2003
(51) Int. Cl.: H01M 8/04, B60L 11/18

(54) **DISPOSITIF ET PROCEDE DE REGULATION DU DEBIT D'AIR DANS UNE PILE A COMBUSTIBLE**
BRENNSTOFFZELLENLUFTSTRÖMUNGSREGULATIONSVERFAHREN
FUEL CELL AIR FLOW REGULATION METHOD

(30) Priorité: 03.10.2002 FR 0212255
(43) Date de publication de la demande: 29.06.2005
(73) Titulaire: Renault s.a.s., 92100 Boulogne Billancourt (FR)
(72) Inventeur: DEWAELE, Gilles, F-92500 Rueil Malmaison (FR); GERARD, David, F-75017 Paris (FR); KERETLI, Fahri, F-78320 Le Mesnil St-Denis (FR)
(86) Numéro de dépôt international: PCT/FR2003/002892
(87) Numéro de publication internationale: WO 2004/032268

(56) Documents cités:
- EP-A- 1 205 993
- DE-A- 19 629 265
- US-B1- 6 342 316
- PATENT ABSTRACTS OF JAPAN vol. 0164, no. 01 (E-1253), 25 août 1992 (1992-08-25) & JP 4 133271 A (NIPPON TELEGR & TELEPH CORP <NTT>), 7 mai 1992 (1992-05-07)

## Description

L'invention concerne un procédé de régulation du débit d'air admis dans la cathode d'une pile à combustible.

L'invention concerne plus particulièrement un procédé de régulation du débit d'air admis dans la cathode d'une pile à combustible qui est embarquée à bord d'un véhicule automobile, du type dans lequel la pile à combustible comporte une conduite d'alimentation cathodique qui alimente la cathode en air, et notamment en oxygène, et une conduite d'évacuation cathodique qui évacue l'air après consommation d'oxygène par la cathode, et dans lequel la conduite d'alimentation cathodique comporte un organe commandé de régulation du débit d'air d'admission, notamment en fonction de paramètres de fonctionnement du moteur.

Une pile à combustible est constituée principalement de deux électrodes, une anode et une cathode, qui sont séparées par un électrolyte. Ce type de pile permet la conversion directe en énergie électrique de l'énergie produite par les réactions d'oxydo-réduction suivantes :
- une réaction d'oxydation d'un combustible, ou carburant, qui alimente l'anode en continu ; et
- une réaction de réduction d'un comburant qui alimente la cathode en continu.

Les piles à combustible utilisées pour fournir de l'énergie électrique à bord de véhicules automobiles sont généralement du type à électrolyte solide, notamment à électrolyte en polymère. Une telle pile utilise notamment de l'hydrogène (H₂) et de l'oxygène (O₂) en guise de combustible et de comburant respectivement.

Contrairement aux moteurs thermiques qui rejettent avec les gaz d'échappement une quantité non négligeable de substances polluantes, la pile à combustible offre notamment l'avantage de ne rejeter que de l'eau qui est produite par la réaction de réduction à la cathode. De plus, le comburant d'une pile du type décrit précédemment peut être de l'air ambiant dont l'oxygène (O₂) est réduit.

La puissance électrique produite par la pile est proportionnelle aux débits de comburant et de carburant.

Pour réguler la puissance électrique produite par la pile à combustible, il est connu de faire varier les débits d'air et d'hydrogène qui alimentent la pile à combustible. Les débits d'air et d'hydrogène sont généralement prédéterminés en fonction de la puissance électrique requise pour le véhicule.

Le brevet « Patent Abstract of Japan vol. 0164, n°01 » & JP 4.133.271 A présente une pile à combustible comportant une cathode alimentée en air contenant de l'oxygène. Il propose de réguler l'air admis dans la cathode en le mélangeant avec un second gaz riche en oxygène. Un des problèmes de ce système est que la régulation du débit d'air admis dans la cathode n'est pas efficace.

Le brevet DE 19.629.265 A présente en outre un procédé pour réguler la pression du gaz admis dans la cathode d'une pile à combustible en fonction de la puissance électrique ou thermique que la pile à combustible doit fournir. Dans ce procédé, le débit de l'air et la teneur en oxygène de l'air sont régulés de manière que la pile à combustible fournisse une puissance électrique déterminée. Un des problèmes de ce système est que le débit d'air est mal régulé.

Comme énoncé précédemment, la pile à combustible consomme uniquement l'oxygène (O₂) contenu dans l'air. En faisant correspondre un débit d'air déterminé en fonction de la puissance électrique demandée à la pile, l'air est considéré comme comportant un taux d'oxygène sensiblement constant.

Cependant, le taux d'oxygène (O₂) présent dans l'air varie selon le lieu où se trouve le véhicule. Ainsi dans un endroit fermé, tel qu'un parking sous-terrain, l'air peut être plus pauvre en oxygène que sur une route de campagne.

Aussi, lorsque le véhicule évolue dans un environnement dont l'air est appauvri en oxygène (O₂), le débit d'air déterminé pour un air contenant un taux d'oxygène normal ne permet pas une alimentation suffisante en oxygène de la pile à combustible. La pile à combustible ne peut donc pas fournir la puissance électrique demandée.

Pour résoudre ce problème, la présente invention propose un procédé du type décrit précédemment, caractérisé en ce qu'il comporte :
- a) une étape de mesure de la différence de concentration en oxygène entre un gaz de référence et l'air circulant dans la conduite d'évacuation cathodique ; et
- b) une étape de calcul de la différence entre ladite valeur mesurée et une valeur de référence ; et
- c) une étape de détermination d'un débit optimal d'air d'admission en fonction du résultat dudit calcul ; et
- d) une étape de commande de l'organe de régulation pour l'obtention dudit débit d'air optimal.

Selon d'autres caractéristiques de l'invention :
- la mesure de l'étape de mesure est réalisée au moyen d'une sonde lambda qui est située dans la conduite d'évacuation cathodique et qui mesure la différence de concentration en oxygène entre l'air atmosphérique et l'air circulant dans la conduite d'évacuation cathodique ;
- l'organe de régulation du débit d'air est une installation de compression de l'air située en amont de la cathode ;
- l'organe de régulation du débit d'air est un moto-ventilateur agencé dans la conduite d'alimentation cathodique ;
- si la valeur mesurée est inférieure à un seuil déterminé, alors un signal d'alerte est émis dans l'habitacle du véhicule ;
- si la valeur mesurée est inférieure à un seuil déterminé, le fonctionnement de la pile à combustible est interrompu.

L'invention concerne en outre un dispositif de régulation du débit d'air admis dans la cathode d'une pile à combustible qui est embarquée à bord d'un véhicule automobile, du type dans lequel la pile à combustible comporte une conduite d'alimentation cathodique qui alimente la cathode en air, et notamment en oxygène (O₂), et une conduite d'évacuation cathodique qui évacue l'air après consommation d'oxygène (O₂) par la cathode, et dans lequel la conduite d'alimentation cathodique comporte un organe commandé de régulation du débit d'air d'admission, notamment en fonction de paramètres de fonctionnement du moteur caractérisé en ce qu'il est configuré pour mesurer de la différence (Oₘₑₛ) de concentration en oxygène (O₂) entre un gaz de référence et l'air circulant dans la conduite d'évacuation cathodique.

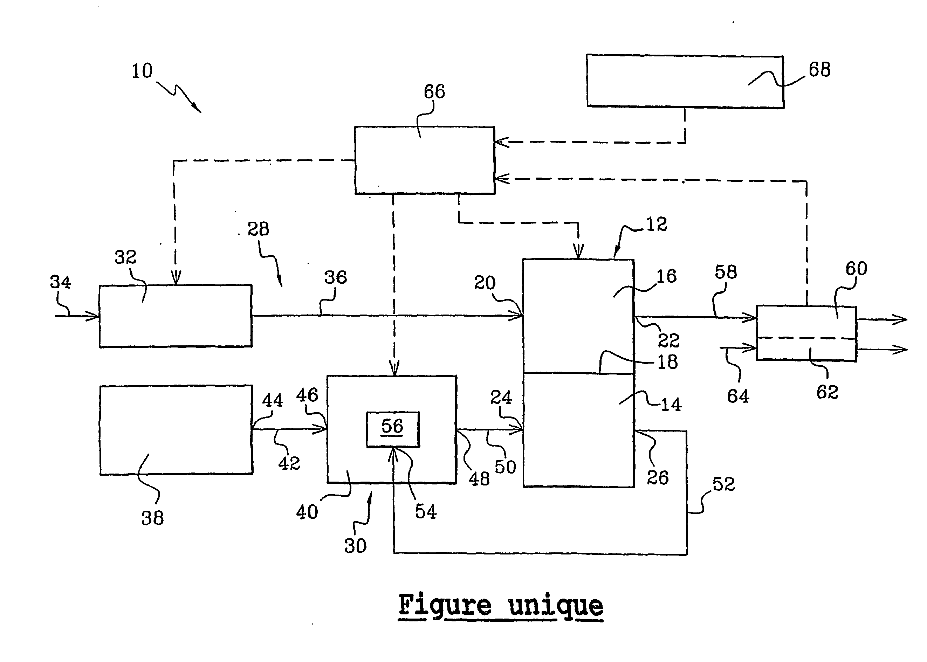

D'autres caractéristiques et avantages de l'invention apparaîtront au cours de la lecture de la description détaillée qui suit pour la compréhension de laquelle on se reportera à la figure unique annexée qui représente schématiquement une installation de production d'électricité qui est équipée d'une pile à combustible et qui comporte un dispositif pour réaliser le procédé selon les enseignements de l'invention.

On a représenté à la figure unique une installation de production d'électricité 10 qui est embarquée à bord d'un véhicule automobile. L'installation 10 comporte notamment une pile à combustible 12 qui produit de l'électricité lorsqu'elle est alimentée en comburant et en carburant.

La pile à combustible 12 comporte une anode 14 et une cathode 16 qui sont ici séparées par une membrane en polymère 18 formant électrolyte.

La cathode 16 comporte un orifice d'alimentation cathodique 20 par lequel elle est alimentée en comburant, qui est ici de l'air, et elle comporte un orifice d'évacuation cathodique 22 par lequel l'excédant de comburant est évacué.

De même, l'anode 14 comporte un orifice d'alimentation anodique 24 par lequel elle est alimentée en carburant, qui est ici un reformât notamment constitué d'hydrogène (H₂), et elle comporte un orifice d'évacuation anodique 26 par lequel l'excédant de carburant est évacué.

L'installation 10 comporte un premier circuit d'alimentation 28 de la cathode 16 en comburant, et notamment en air, et elle comporte un second circuit d'alimentation 30 de l'anode 14 en carburant, et notamment en hydrogène (H₂).

Le premier circuit d'alimentation 28 de la cathode 16 se compose notamment d'un module d'admission d'air atmosphérique 32 dans lequel l'air atmosphérique est admis via un tronçon d'entrée 34, et qui alimente la cathode 16 en air par l'intermédiaire d'une conduite d'alimentation cathodique 36 qui est raccordée à l'orifice d'alimentation cathodique 20.

Le module d'admission d'air 32 est notamment destiné à réguler le débit d'air admis dans la cathode 16. Le module d'admission d'air 32 comporte selon ce mode de réalisation de l'invention un compresseur (non représenté).

Dans un autre mode de réalisation de l'invention non représenté, le module d'admission d'air 32 comporte un moto-ventilateur qui est agencé dans la conduite d'alimentation cathodique 36.

Le second circuit d'alimentation 30 de l'anode 14 se compose principalement d'un réservoir 38 contenant un hydrocarbure tel que de l'essence, et d'un reformeur 40.

Une tubulure d'alimentation en hydrocarbure 42 est raccordée par une première extrémité 44 au réservoir 38 et par une seconde extrémité à un orifice d'entrée 46 du reformeur 40.

Le reformeur 40 est ici destiné à extraire l'hydrogène (H₂) contenu dans l'hydrocarbure. Après extraction de l'hydrogène (H₂), il rejette par un orifice de sortie 48 un carburant, ou reformât, contenant de l'hydrogène (H₂) dans une tubulure d'alimentation 50 de l'anode 14 qui est raccordée à l'orifice d'alimentation anodique 24.

Lors du fonctionnement de la pile à combustible 12, l'anode 14 consomme une partie de l'hydrogène (H₂) contenue dans le reformât, le reformât excédentaire étant rejeté par l'orifice d'évacuation anodique 26.

L'orifice d'évacuation anodique 26 débouche dans une tubulure d'évacuation anodique 52 qui conduit le reformât excédentaire jusqu'à un orifice d'alimentation 54 d'un brûleur 56 qui est intégré au reformeur 40. Le brûleur 56 est notamment destiné à consumer le reformât excédentaire de façon à fournir la chaleur nécessaire au fonctionnement du reformeur 40.

Lors du fonctionnement de la pile à combustible 12, la cathode 16 consomme une partie de l'oxygène (O₂) contenu dans l'air, l'air excédentaire étant rejeté par l'orifice d'évacuation cathodique 22.

L'orifice d'évacuation de la cathode 16 débouche dans une conduite d'évacuation cathodique 58 qui expulse l'air excédentaire vers l'atmosphère. Selon les enseignements de l'invention, une sonde de détection d'oxygène 60, qui est dans ce mode de réalisation de l'invention une sonde de type lambda, est intercalée dans la conduite d'évacuation cathodique 58.

Selon une utilisation traditionnelle connue de l'homme du métier, une portion de référence 62 de la sonde lambda 60 est en contact avec l'air ambiant qui est ici acheminé par un conduit d'air 64.

L'installation 10 comporte aussi une unité de commande électronique 66 qui est destinée à piloter le fonctionnement de la pile à combustible 12. L'unité de commande électronique 66 est notamment reliée par des fils conducteurs électriques, représentés en trait interrompu à la figure unique, à la sonde lambda 60, au reformeur 40, au module d'admission d'air 32 et à un dispositif de commande de puissance 68 situé dans l'habitacle du véhicule et qui peut par exemple être une pédale d'accélération.

Ainsi, lorsque le conducteur du véhicule requiert de la puissance électrique par l'intermédiaire de la pédale 68, l'unité de commande électronique 66 commande le module d'admission d'air 32 d'une part et le reformeur 40 d'autre part de façon à fournir des débits de comburant et de carburant déterminés en fonction de la puissance de la puissance électrique requise.

Nous allons à présent décrire le procédé mettant en oeuvre une telle installation 10 selon les enseignements de l'invention. Ce procédé est destiné à ajuster le débit d'air en fonction de sa teneur en oxygène lorsque le conducteur requiert de la puissance électrique à la pile à combustible 12 pour le moteur du véhicule. La pile à combustible 12 est alors alimentée en comburant et en carburant et elle rejette par les orifices d'évacuation anodique et cathodique l'excès de reformât et d'air, respectivement.

Le procédé comporte ici quatre étapes principales :
- a) une première étape E1 de mesure de la différence Oₘₑₛ de concentration en oxygène entre l'air ambiant et l'air circulant dans la conduite d'évacuation cathodique 58 ; et
- b) une deuxième étape E2 de calcul de la différence (Oₘₑₛ- O_{ref}) entre ladite valeur mesurée Oₘₑₛ et une valeur de référence O_{ref} ; et
- c) une troisième étape E3 de détermination d'un débit optimal d'air d'admission en fonction du résultat (Oₘₑₛ-O_{ref}) dudit calcul ; et
- d) une quatrième étape E4 de commande de l'organe de régulation pour l'obtention dudit débit d'air optimal.

Lors de la première étape E1, la conduite d'évacuation cathodique 58 guide jusqu'à la sonde lambda 60 l'air rejeté par l'orifice d'évacuation cathodique 22 après consommation d'une partie de son oxygène par la pile à combustible 12. La sonde lambda 60 émet alors vers l'unité de commande électronique 66 un signal électrique qui constitue la mesure Oₘₑₛ de la différence de concentration en oxygène entre l'air atmosphérique et l'air circulant dans la conduite d'évacuation cathodique 58. Le signal électrique a en effet une intensité proportionnelle à la différence de concentration en oxygène entre l'air atmosphérique et l'air circulant dans la conduite d'évacuation cathodique 58.

Ensuite, lors de la deuxième étape E2, l'unité de commande électronique 66 soustrait la valeur de la mesure Oₘₑₛ émise par la sonde lambda 60 d'une valeur de référence O_{ref}. La valeur de référence O_{ref} est entrée en mémoire dans l'unité de commande électronique 66. La valeur de référence O_{ref} est ici la valeur théorique de la différence de concentration en oxygène entre l'air atmosphérique et l'air circulant dans la conduite d'évacuation cathodique 58 lorsque l'air atmosphérique contient une proportion normale d'oxygène, c'est-à-dire environ 21%.

Ainsi, lorsque la proportion d'oxygène de l'air ambiant est inférieure à la proportion normale, la valeur mesurée Oₘₑₛ diffère de façon significative de la valeur de référence O_{ref}.

Lors de la troisième étape E3, l'unité de commande électronique 66 détermine un débit d'air optimal à partir d'une cartographie enregistrée en mémoire en fonction du résultat de la soustraction (Oₘₑₛ - O_{ref}) effectuée lors de la deuxième étape E2. Le débit optimal d'air est défini de façon que le débit d'oxygène traversant la pile à combustible 12 soit au moins suffisant pour que la pile 12 fournisse la puissance électrique requise par le conducteur.

Enfin, lors de la quatrième étape E4, l'unité de commande électronique 66 pilote le module d'admission d'air 32 de façon que le débit d'air admis soit sensiblement égal au débit d'air optimal.

Selon une variante de l'invention, lorsque la différence (Oₘₑₛ - O_{ref}) calculée lors de la deuxième étape E2 est inférieure à un seuil d'alerte, un signal d'alerte est émis dans l'habitacle du véhicule afin de prévenir le conducteur que l'air ambiant est trop pauvre en oxygène pour pouvoir alimenter de façon satisfaisante la pile à combustible 12 même en augmentant le débit d'air dans les proportions permises par les capacités du module d'admission d'air 32.

Selon une autre variante de l'invention lorsque la différence (Oₘₑₛ - O_{ref}) calculée lors de la deuxième étape E2 est inférieure à un seuil d'alerte, le fonctionnement de la pile à combustible 12 est automatiquement interrompu par l'unité de commande électronique 66.

## Revendications

1. Procédé de régulation du débit d'air admis dans la cathode (16) d'une pile à combustible (12) qui est embarquée à bord d'un véhicule automobile, du type dans lequel la pile à combustible (12) comporte une conduite d'alimentation cathodique (36) qui alimente la cathode (16) en air, et notamment en oxygène (O₂), et une conduite d'évacuation cathodique (58) qui évacue l'air après consommation d'oxygène (O₂) par la cathode (16), et dans lequel la conduite d'alimentation cathodique (36) comporte un organe commandé (32) de régulation du débit d'air d'admission, notamment en fonction de paramètres de fonctionnement du moteur,
**caractérisé en ce qu'**il comporte :
- a) une étape (E1) de mesure de la différence (Oₘₑₛ) de concentration en oxygène (O₂) entre un gaz de référence et l'air circulant dans la conduite d'évacuation cathodique (58) ; et
- b) une étape (E2) de calcul de la différence (Oₘₑₛ - O_{ref}) entre ladite valeur mesurée (Oₘₑₛ) et une valeur de référence (O_{ref}) ; et
- c) une étape (E3) de détermination d'un débit optimal d'air d'admission en fonction du résultat (Oₘₑₛ - O_{ref}) dudit calcul ; et
- d) une étape (E4) de commande de l'organe de régulation (32) pour l'obtention dudit débit d'air optimal.

2. Procédé selon la revendication précédente, **caractérisé en ce que** la mesure (Oₘₑₛ) de l'étape de mesure (E1) est réalisée au moyen d'une sonde lambda (60) qui est située dans la conduite d'évacuation cathodique (58) et qui mesure la différence de concentration en oxygène entre l'air atmosphérique et l'air circulant dans la conduite d'évacuation cathodique (58).

3. Procédé selon la revendication 1, **caractérisé en ce que** l'organe de régulation (32) du débit d'air est une installation de compression de l'air située en amont de la cathode (16).

4. Procédé selon la revendication 1, **caractérisé en ce que** l'organe de régulation (32) du débit d'air est un moto-ventilateur agencé dans la conduite d'alimentation cathodique (36).

5. Procédé selon l'une des revendications 1 ou 2, **caractérisé en ce que**, si la valeur mesurée (Oₘₑₛ) est inférieure à un seuil déterminé, alors un signal d'alerte est émis dans l'habitacle du véhicule.

6. Procédé selon la revendication précédente, **caractérisé en ce que**, si la valeur mesurée (Oₘₑₛ) est inférieure à un seuil déterminé, le fonctionnement de la pile à combustible (12) est interrompu.

7. Dispositif de régulation du débit d'air admis dans la cathode (16) d'une pile à combustible (12) qui est embarquée à bord d'un véhicule automobile, du type dans lequel la pile à combustible (12) comporte une conduite d'alimentation cathodique (36) qui alimente la cathode (16) en air, et notamment en oxygène (O₂), et une conduite d'évacuation cathodique (58) qui évacue l'air après consommation d'oxygène (O₂) par la cathode (16), et dans lequel la conduite d'alimentation cathodique (36) comporte un organe commandé (32) de régulation du débit d'air d'admission, notamment en fonction de paramètres de fonctionnement du moteur **caractérisé en ce qu'**il est configuré pour mesurer de la différence (Oₘₑₛ) de concentration en oxygène (O₂) entre un gaz de référence et l'air circulant dans la conduite d'évacuation cathodique (58).

## Claims

1. A method of regulating the flow rate of air admitted into the cathode (16) of a fuel cell (12) which is installed on board a motor vehicle, of the type in which the fuel cell (12) comprises a cathodic supply conduit (36) which supplies the cathode (16) with air and in particular oxygen (O₂) and a cathodic discharge conduit (58) which discharges the air after consumption of oxygen (O₂) by the cathode (16) and in which the cathodic supply conduit (36) comprises a controlled member (32) for regulation of the admission air flow rate, in particular as a function of operating parameters of the motor,
**characterised in that** it comprises:
- a) a step (E1) of measuring the difference (Oₘₑₛ) in concentration of oxygen (O₂) between a reference gas and the air flowing in the cathodic discharge conduit (58); and
- b) a step (E2) of calculating the difference (Oₘₑₛ - O_{ref}) between said measured value (Oₘₑₛ) and a reference value (O_{ref}); and
- c) a step (E3) of determining an optimum flow rate of admission air as a function of the result (Oₘₑₛ - O_{ref}) of said calculation; and
- d) a step (E4) of controlling the regulating member (32) to obtain said optimum air flow rate.

2. A method according to the preceding claim **characterised in that** measurement (Oₘₑₛ) of the measuring step (E1) is effected by means of a lambda probe (60) which is disposed in the cathodic discharge conduit (58) and which measures the difference in concentration of oxygen between the atmospheric air and the air flowing in the cathodic discharge conduit (58).

3. A method according to claim 1 **characterised in that** the member (32) for regulating the air flow rate is an installation for compression of the air disposed upstream of the cathode (16).

4. A method according to claim 1 **characterised in that** the member (32) for regulating the air flow rate is a motor-fan unit arranged in the cathodic supply conduit (36).

5. A method according to one of claims 1 and 2 **characterised in that**, if the measured value (Oₘₑₛ) is lower than a given threshold, then an alert signal is emitted in the passenger compartment of the vehicle.

6. A method according to the preceding claim **characterised in that**, if the measured value (Oₘₑₛ) is lower than a given threshold, operation of the fuel cell (12) is interrupted.

7. Apparatus for regulating the flow rate of air admitted into the cathode (16) of a fuel cell (12) which is installed on board a motor vehicle, of the type in which the fuel cell (12) comprises a cathodic supply conduit (36) which supplies the cathode (16) with air and in particular oxygen (O₂) and a cathodic discharge conduit (58) which discharges the air after consumption of oxygen (O₂) by the cathode (16) and in which the cathodic supply conduit (36) comprises a controlled member (32) for regulation of the admission air flow rate, in particular as a function of operating parameters of the motor, **characterised in that** it is configured to measure the difference (Oₘₑₛ) in concentration of oxygen (O₂) between a reference gas and the air flowing in the cathodic discharge conduit (58).

## Patentansprüche

1. Verfahren zur Regelung des Luftdurchsatzes, der in eine Kathode (16) einer Brennstoffzelle (12) eingelassen wird, die sich an Bord eines Kraftfahrzeugs befindet, von der Art, bei welcher die Brennstoffzelle (12) eine kathodische Versorgungsleitung (36) aufweist, welche die Kathode (16) mit Luft und insbesondere mit Sauerstoff (O₂) versorgt, und eine kathodische Auslassleitung (58), welche die Luft nach Verbrauch des Sauerstoffs (O₂) durch die Kathode (16) auslässt, und in welcher die kathodische Versorgungsleitung (36) ein gesteuertes Regelungsbauteil (32) des Einlassluftdurchsatzes aufweist, insbesondere in Abhängigkeit von Betriebsparametern des Motors,
**dadurch gekennzeichnet, dass** es aufweist:
a) einen Schritt (E1) einer Messung des Konzentrationsunterschieds (Oₘₑₛ) an Sauerstoff (O₂) zwischen einem Referenzgas und der Luft, die in der kathodischen Auslassleitung (58) strömt; und
b) einen Schritt (E2) einer Berechnung des Unterschieds (Oₘₑₛ - O_{ref}) zwischen dem gemessenen Wert (Oₘₑₛ) und einem Referenzwert (O_{ref}); und
c) einen Schritt (E3) einer Feststellung eines optimalen Durchsatzes an Einlassluft in Abhängigkeit von dem Ergebnis (Oₘₑₛ - O_{ref}) der Berechnung; und
d) einen Schritt (E4) einer Steuerung des Regelungsbauteils (32) für den Erhalt des optimalen Luftdurchsatzes.

2. Verfahren nach dem vorangegangenen Anspruch, **dadurch gekennzeichnet, dass** die Messung (Oₘₑₛ) des Messschritts (E1) mittels einer Lambdasonde (60) realisiert wird, welche in der kathodischen Auslassleitung (58) angeordnet ist und welche den Konzentrationsunterschied an sauerstoff zwischen der Umgebungsluft und der Luft, die in der kathodischen Auslassleitung (58) strömt, misst.

3. Verfahren nach Anspruch 1, **dadurch gekennzeichnet, dass** das Regelungsbauteil (32) des Luftdurchsatzes eine Komprimierungseinrichtung der Luft ist, die stromaufwärts der Kathode (16) angeordnet ist.

4. Verfahren nach Anspruch 1, **dadurch gekennzeichnet, dass** das Regelungsbauteil (32) des Luftdurchsatzes ein inotorgrtriebener Ventilator ist, der in der kathodischen Versorgungsleitung (36) angeordnet ist.

5. Verfahren nach einem der Ansprüche 1 oder 2, **dadurch gekennzeichnet, dass**, wenn der gemessene Wert (Oₘₑₛ) niedriger als ein vorherbestimmter Schwellenwert ist, dann ein Warnsignal in die Fahrgastzelle ausgesendet wird.

6. Verfahren nach dem vorangegangenen Anspruch, **dadurch gekennzeichnet, dass**, wenn der gemessene Wert (Oₘₑₛ) niedriger als ein vorherbestimmter Schwellenwert ist, der Betrieb der Brennstoffzelle (12) unterbrochen wird.

7. Vorrichtung zur Regelung des Durchsatzes an Luft, die in die Kathode (16) einer Brennstoffzelle (12) eingelassen wird, welche sich an Bord eines Kraftfahrzeugs befindet, von der Art, bei welcher die Brennstoffzelle (12) eine kathodische Versorgungsleitung (36) aufweist, welche die Kathode (16) mit Luft und insbesondere mit Sauerstoff (O₂) versorgt, und eine kathodische Auslassleitung (58), welche die Luft nach dem Verbrauch von Sauerstoff (O₂) durch die Kathode (16) auslässt, und in welcher die kathodische Versorgungsleitung (36) ein gesteuertes Regelungsbauteil (32) des Durchsatzes an Einlassluft aufweist, insbesondere in Abhängigkeit von Betriebsparametern des Motors, **dadurch gekennzeichnet, dass** sie ausgestaltet ist, um den Konzentrationsunterschied (Oₘₑₛ) an Sauerstoff (O₂) zwischen einem Referenzgas und der Luft zu messen, die in der kathodischen Auslassleitung (58) strömt.
